Europäisches Patentamt

European Patent Office

Office européen des brevets

(11) Publication number: **0 647 912 A1**

# EUROPEAN PATENT APPLICATION

(21) Application number: **93830409.4**

(51) Int. Cl.⁶: $G06F\ 19/00$

(22) Date of filing: **07.10.93**

(43) Date of publication of application:
**12.04.95 Bulletin 95/15**

(84) Designated Contracting States:
**AT BE CH DE DK ES FR GB GR IE LI LU MC NL PT SE**

(71) Applicant: **TELESIA MICROELETTRONICA S.r.l.**
**54/D Via Chiabrera**
**I-00145 Roma (IT)**

(72) Inventor: **Rinaldo, Paolo, c/o Telesia**
**Microelettronica S.r.1**

**54/D Via Chiabrera,**
**I-00145 Roma RM (IT)**
Inventor: **Colasanti, Riccardo**
**c/o Telesia Microelettronica S.r.l.**
**54/D Via Chiabrera**
**00145 Roma RM (IT)**

(74) Representative: **Tonon, Gilberto et al**
**c/o Società Italiana Brevetti S.p.A.**
**Piazza di Pietra, 39**
**I-00186 Roma (IT)**

(54) Electonic apparatus for time-based games and/or semi-interactive activities.

(57) Apparatus for time-based games and/or semi-interactive activities, characterized in that it comprises:
- multiple user apparatuses provided with display means, microprocessor means, keyboard means, and an absolute clock;
- management apparatus for use by a company controlling and conducting semi-interactive activities with the owners of said user apparatuses;
- a first information communication channel connected to said absolute clock, said channel being unidirectional from company to user;
- a second information communication channel differing from said first channel in that it is from user to company, for transfer of information correlated to the time supplied by said clock, and of information received from said user and associated to further information supplied by the user to said user apparatus.

FIG 2

Rank Xerox (UK) Business Services
(3.10/3.09/3.3.4)

The present invention relates to an apparatus for time-based games and/or semi-interactive activities.

More particularly, according to a first embodiment, the present invention relates to an apparatus for time-based games and/or semi-interactive activities correlated with radio and television type transmissions, based on the use of "time windows" connected to phenomena associated with an absolute time.

From common experience, programmes of the radio or television type are known that are based on "quizzes", lotteries or other games with prizes which are addressed to the listeners and/or viewers, during which it is necessary to reply "live" within a certain period of time indicated by the person presenting the program.

Usually, these systems are organized on the basis of telephone-based interactive activity, that is to say a listener or viewer who wishes to take part in the game must call the presenter on the telephone and then reply, usually within a specified length of time, to the various questions or operations in the game, which normally ends with a prize or the offer of consumable goods. In these cases, only those who manage to get through on the telephone are able to take part. This fact is a serious limitation as, in particularly popular transmissions, merely managing to get the line and pass through the filter of telephone operators is in a sense a question of "good luck". In this way, participation in the radio or television quiz programme can of necessity only involve an extremely limited number of listeners or viewers. In other cases, the radio listener or television viewer is merely invited to fill in and post a pre-printed or conventional postcard, which must be sent to the organizer, whether this be the radio or television station itself or the sponsor, thus involving an enormous amount of post and furthermore the total uncertainty of the listener or viewer taking part in the game as to whether or not he has replied correctly to the question. In fact, programmes of this kind often take place on a once-a-week basis, thus losing the element of interest based on knowing immediately whether or not a participant has won.

Again in the case of radio or television programmes with telephone-type interaction, using the apparatus according to the present invention, the only people who might be interested in telephoning are those who have picked the correct reply, thus reducing the number of telephone calls.

In the case of postcard-based competitions also, the amount of post would be drastically reduced and, consequently, the financial burden of operations for classification and control of the postal material sent to the organizer or the like.

The same concept is also true for games and lotteries connected with sporting events, in which using the known systems it is typically necessary to fill in and send pre-printed postcards or other documents before the start of the event, which the event organizer then has to check one by one in order to determine the winners.

Using the apparatus according to the present invention, only the winners would have an interest in sending the postcard or other paperwork, thus simplifying the control operations and lowering the consequent costs.

Another use for the apparatus according to the present invention is in games and lotteries promoted by printed media (newspapers, magazines, etc.). In this case, part of the apparatus destined for the user, and in the following indicated as user apparatus, can be provided free of charge with the publication, or together with a specific product put on sale by a sponsor. An example of this could be a carton of washing powder.

The technical teaching behind the system of the apparatus according to the present invention consists in an apparatus to be supplied to those participating in the game or lottery indicated above (without any limitation being provided by the examples given above), said apparatus being provided with an absolute time generator (clock), circuits capable of supplying "time windows" at predetermined times correlated with the time of a radio or television transmission, or with a sporting event or other event having a pre-determined time, said apparatus comprising a generator of one or more time windows, inside which is a "slot" within which the competitor has to perform a certain operation relating to the competition, game, lottery or the like.

The operation performed by the player can be done using a keyboard, for example of an extended or reduced alphanumeric kind, as can be clearly seen by an expert in the field, and is associated with information shown on a display associated to the part of the apparatus available to the competitor. As will be seen from the following, the display can provide a menu to guide the competitor, and it can supply the indication that the competitor has won, and/or a special code to be written on a conventional or pre-printed postcard to be sent or returned to the organizer. As a general indication, the apparatus available to the user will have a structure similar to that of a "business card" type pocket calculator, and can optionally be associated with a beeper. This apparatus made available to the client will be supplied with electronics that can be programmed by means of an irreversibly dedicated apparatus that cannot be modified even by a knowledgeable client.

Programming of the user apparatus can conveniently be done by means of the dedicated apparatus at the moment of circulation of the user apparatus themselves.

The apparatus destined for users can be of a disposable type, or alternatively can be returned to the organizer for further programming and re-use.

In any case, bearing in mind the fact that scale economics allow exceptional reduction of prices for integrated electronics, user apparatus will with advantage be of the merely disposable kind.

As mentioned above, the apparatus according to the present invention works on the basis of "absolute time" and "time windows". As indicated before, "absolute time" is intended to mean time divided into /year/month/day/hour/(seconds)/ and marked by a clock inside the user apparatus, and by a clock substantially isochronous with that in the apparatus used by the event organizer. Clearly, a third clock, substantially isochronous with that in the organizer's apparatus, will be present in the dedicated apparatus mentioned above and provided for initial programming and relative synchronization of the user apparatus.

According to the present invention, two basic operation modes are provided for.

(A) "A posteriori" correlation:

in this case the user can give only one reply in each "time window" as defined above. In order to be able to compete for the "prize", he must only give the replies within the "time windows" indicated by the person presenting the event.

Each user apparatus, which has been programmed with the information on how the absolute time has been divided into a sequence of "time windows", but which contains no information as to the specific "time window" in which a question will be placed, or as to the reply to the question itself, merely records one by one the replies and the "time window" in which each reply has been given by the user. For preference, the replies must be given by the user within a certain "slot" of time within the time window. This is because, although the user apparatus contains an absolute time generator (clock), a certain amount of offset is always possible, due, for example, to variations in transmission time, etc..

A dedicated electronic system, which will be illustrated in greater detail in the following, is available to the person presenting the event, and will be termed "time-based correlator". This is likewise provided with an absolute clock which is essentially isochronous with that of the user apparatus, and which, at the end of each event, supplies the public taking part with a numeric or alphanumeric sequence, after performing a calculation using a secret algorithm and according to the sequence of "time windows" and correct replies to the "quiz" questions or the like. In the following this sequence will be called the "key".

The above algorithm is pre-programmed into all the user apparatus, and these, at the end of the event, will calculate in a similar manner a "result sequence" made up of another sequence of a numeric or alphanumeric type according to the data recorded during the event ("time windows" and any relative replies).

In a preferred embodiment, the user apparatus does not supply the user with the "result sequence", but rather it is the user who types in the "key" on a special keyboard, and the user apparatus, having compared it with the "result sequence", will inform the user, by means of a message on the display, whether or not he can expect to win a prize. This can be done, for example, using the words "you have won" or "you could win" if winning the prize is subject to subsequent draws. This is in order to minimize attempts by competitors to discover the secret algorithm.

(B) Advance correlation:

in a second embodiment, which will here be termed an advance correlation embodiment, all the user apparatus to be correlated to a given event are programmed in advance with the "time windows" within which the user is allowed to reply and, optionally, also with the correct replies, so that comparison with those supplied by the user can be performed directly.

In this case the event must take place according to the pre-programmed times, so that the "time windows" indicated by the person presenting the event as those in which the reply is to be given coincide with those pre-programmed in the user apparatus. Should the replies also be pre-programmed in the user apparatus, the questions put during the event must follow a specific sequence which is established "a priori".

In an alternative embodiment, again according to the present invention, the user apparatus itself could put the questions to the user wishing to take part in the game.

Obviously, only if the user replies to these questions within the expected "time windows" (and correctly, if the event so requires) will he be able to compete for the prize, as he will be informed by a message on the screen of his user apparatus as indicated above.

In a preferred embodiment valid for both "a posteriori" correlation and advance correlation indicated above, in the case of a "win" or the possibility of competing for the prize, along with the explanatory message on the screen each user apparatus could provide an alphanumeric or numeric code hereinafter called "combination", which represents the proof of his "win" for each user apparatus user. This combination may be the same for all user apparatus, or, preferably, different for each user apparatus and for each event. These combinations will be known only to the event organizer and the official bodies responsible for verifying the correct running of a possible prize competition, and said combinations will have been pre-programmed in advance in each user apparatus. The "combinations" will be structured in such a way as to discourage the mailing of postcards or any other form of communication relating to "combinations" that are either invented out of the blue or following some arbitrary form of reasoning. The "combination" can be communicated by the competing user to the event organizer in any manner. Typically, for example, a postcard can be sent bearing name and "combination". In order to discourage the mailing of a number of postcards bearing the same combination, it will be sufficient to add a clause to the competition rules, in which it is stated that, should more than one postcard bearing the same "combination" be received, only one of said postcards, extracted at random from the rest, will be allowed to compete for the prize.

To still further discourage the mailing of postcards bearing invented combinations, it may be advisable for part of the "combination" to clearly show the serial number of the user apparatus, which can be memorized electronically inside the user apparatus and/or printed in a known manner on the user apparatus, so that only the true owner of the user apparatus on which the winning solution has been recorded is able to prove that he has won.

Alternatively, each user apparatus can be supplied with a certain number of pre-printed postcards (even one for each event), which bear the serial number of the user apparatus itself as the first part of the "combination".

Obviously, each user apparatus can, if necessary, be programmed in such a way as to allow participation in a series of a number of events.

The present invention will now be described with reference to the presently preferred embodiments thereof, given merely as a non-limiting illustration, and based on the figures in the enclosed drawings, in which:

figure 1 shows the program chart for the user apparatus according to the present invention;

figure 2 shows a possible physical structure of the user apparatus incorporating the electronics shown in figure 1;

figure 3 shows an example of timing between user apparatus and the apparatus for use by the operator when working using "a posteriori" correlation;

figure 4 shows an example of timing between user apparatus and the apparatus for use by the operator when working using advance correlation;

figure 5 shows the general configuration of a programming unit for user apparatus;

figure 6 shows the flow chart of a first embodiment of program means resident in a user apparatus;

figure 7 shows the flow chart of a second embodiment of program means resident in a user apparatus;

figure 8 shows the possible configuration of a participation postcard for performing the operations as illustrated in the flow charts of figures 6 and 7;

figures 9a and 9b show the flow chart of the program means resident in the apparatus for those organizing and presenting the events indicated; and

figure 10 shows the flow diagram of the program means resident in the programming apparatus of figure 5.

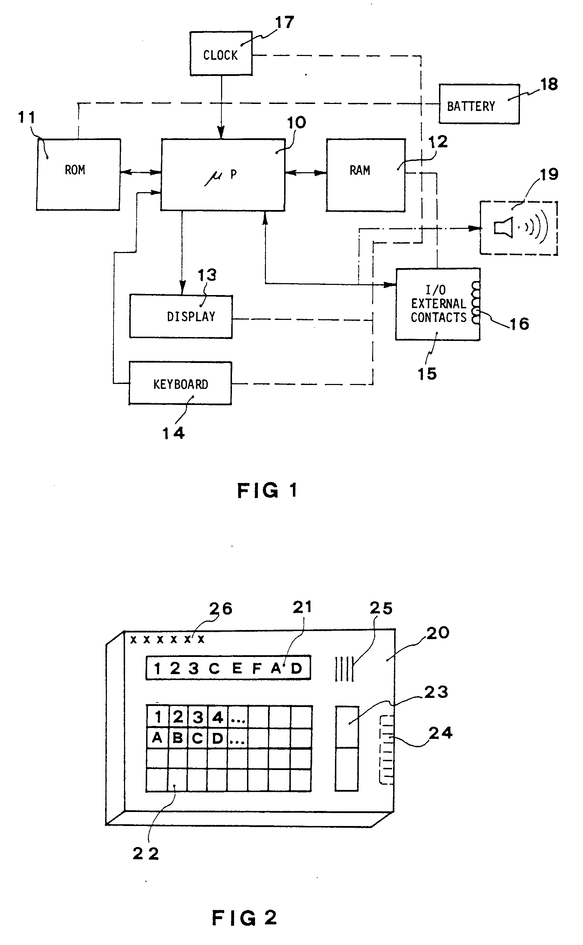

With reference to the drawings, and in particular to figure 1, a typical user apparatus according to the present invention comprises a microprocessor 10 associated in a known way to a program ROM 11, a RAM 12, a display unit 13, a keyboard 14 and an input/output unit 15 associated to a group 16 of external contacts. The microprocessor 10 is associated to a time generator or clock 17 which conveniently also operates as a clock generator for the microprocessor 10. A battery 18 supplies power to the electronics for the expected working time of the user apparatus, sufficient to ensure operation of the clock 17 as a generator of absolute time and, by means of microprocessor 10, said battery can provide for showing the current time on the display 13. A beeper 19 can be provided on the bus connecting the microprocessor 10 and the input output unit 15, said beeper being provided to supply the user with information in addition to that supplied by the display 13.

In the following description, examples of programmes resident inside the structure shown in figure 1 will be illustrated.

Figure 2 shows a presently preferred embodiment of the user apparatus according to the present invention. The user apparatus comprises an outer case 20, a preferably alphanumeric display 21, a preferably alphanumeric keyboard 22 and one or more function keys 23. The unit 20 is further provided with a contact pad 24 which allows access to the internal electronics to enable data setting up the user apparatus to be inserted. Optionally, the user apparatus is also provided with slots 25 in correspondence with the electronic beeper marked 19 in figure 1.

In an easily visible area of the user apparatus 20, a serial number 21 for the user apparatus is printed, and said serial number can be associated to the combination formed by the user with the aid of the program means resident within the microprocessor contained in unit 20.

Said serial number can be programmed into the electronics of the user apparatus instead of being printed, or as well as being printed.

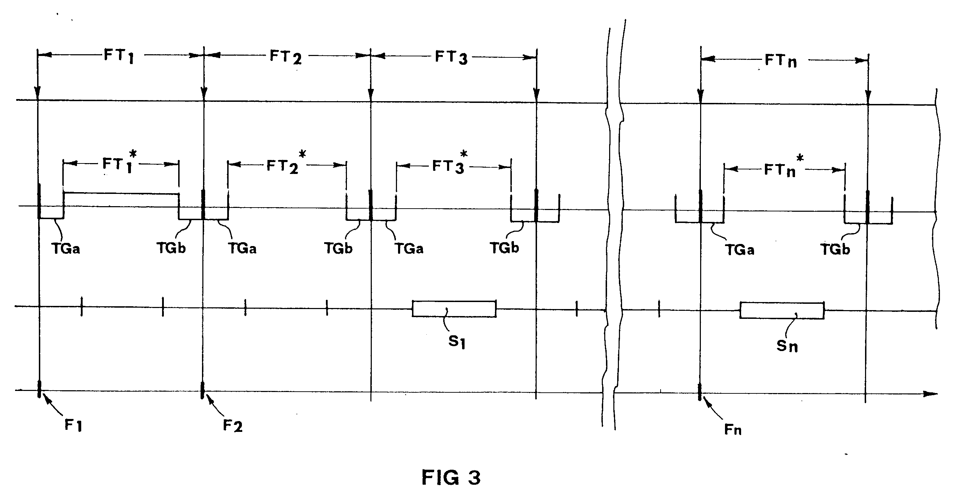

Figure 3 shows a diagram relating to the "time windows" related to the working mode in case (A) of "a posteriori" correlation as described above. As can be seen from the figure, the "absolute time" is divided into consecutive "time windows", indicated FT1, FT2,....FTn. Each of these "time windows" has a duration which is pre-determined at the moment of definition of the parameters for user interaction, and is identified by a label F1, F2,...Fn correlated with the absolute time of, for example:

/year/month/day/hour/minute/

These data will be programmed into the user apparatus to synchronize the user apparatus' internal clock.

As can be seen from figure 3, the apparatus to be used by the operator will have reduced time windows FT1*, FT2*, .....FTn* whose size is reduced with respect to the windows FT1, FT2,.....,FTn by an amount equivalent to TGa + TGb, in which TGa, TGb are guard bands set to take into account errors in isochronism between the operator's apparatus and the user apparatus.

The reduced time windows FT1*, FT2*,..... define the time valid for a "slot", indicated in figure 3 with S1,...Sn, which the person presenting the transmission or the like will indicate as the time valid for replying to a specific question put to users in possession of a user apparatus.

In this context, a multiplicity of slots S will form an "event", made up of a number of questions put to the users in the single slots (one question per slot) and not necessarily directly positioned in consecutive time windows (but in any case with a maximum of one slot per time window FTi*).

According to a preferred embodiment of the invention the user apparatus can be used for a plurality of "events". Each "winning combination" is associated to an "event".

As an example and in order to give a better idea of the concepts, imagine a television quiz transmission taking place once a week, for instance on Thursday, over a period of several months. The single slots correspond to the questions put during the transmission on Thursday of a given week. The "event" corresponds to the group of all (or part) of the questions put during the transmission on Thursday of a given week of a given month (and optionally year).

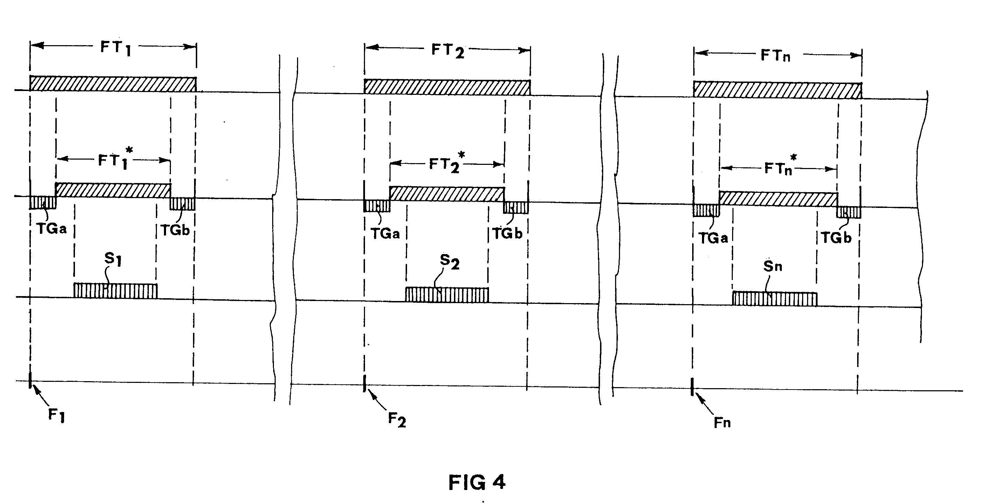

With reference now to figure 4, there is shown a diagram relating to the "time windows" relating to the working mode in case (B) of advance correlation as described above.

In this case, the time is divided into time windows FT1, FT2,....FTn which are not necessarily adjacent to one another and which are identified with labels F1, F2,....Fn as in the preceding case. In this case also there are reduced time windows FT1*, FT2*,....FTn*, and slots S1, S2,....Sn according to the methods described above with reference to figure 3, so that detailed illustration thereof is not considered necessary.

The main difference between advance correlation and the "a posteriori" correlation described above lies in the fact that both the time window and the reply are known to the user apparatus. This means that the user apparatus does not have to calculate the resulting sequence, and it simplifies the job of the user, who is no longer required to type the key into the user apparatus in order to learn whether or not he has won.

Other cases are clearly possible:

a) advance correlation in which the questions are also present in the user apparatus;

b) advance correlation for the time windows, but "a posteriori" correlation for the replies: that is to say the user apparatus knows the time windows within which the user must give the reply, but not the reply itself.

At the end of the event, the screen 13 (21) on the user apparatus will show any information such as "YOU HAVE WON" or "YOU MAY WIN" and, immediately following this, the "winning combination" in the form of numeric or alphanumeric data.

The user apparatus used for an event can also be re-used for other events with similar objects and methods of participation which are not rigidly fixed or correlated from one event to another.

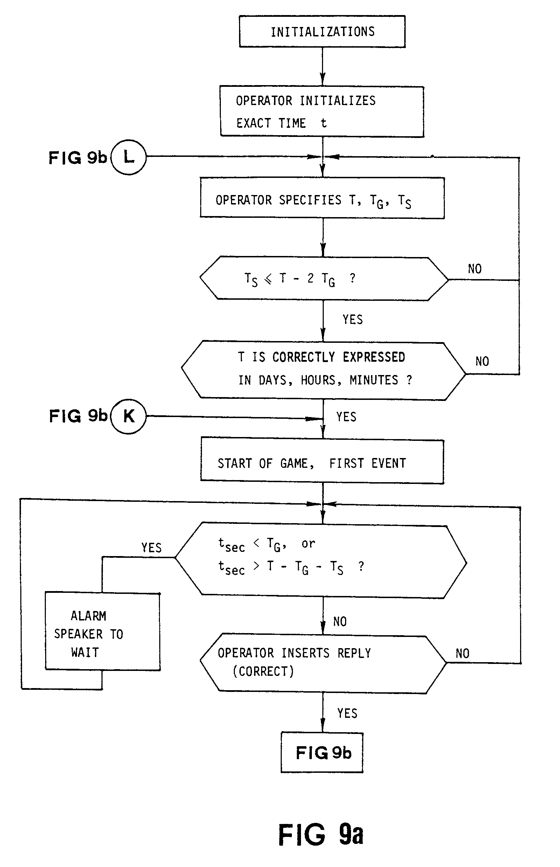

For a given "winning combination" the user will have to fill in and post a postcard, an example of which is shown in figure 8, without the illustration of figure 8 in any way forming a limiting example. In effect, the "winning combination" can also be communicated to the organizer by telephone, giving the advantages described in the introductory part of the present specification.

In the example shown in figure 8, the postcard 50 can comprise a field 51 in which the number of the contest is written; a field 52 in which the serial number of the user apparatus in the user's possession can be pre-printed, or in which the user himself can transcribe the serial number, and a field 53 in which the user copies the "winning combination" visualized by the user apparatus as described above.

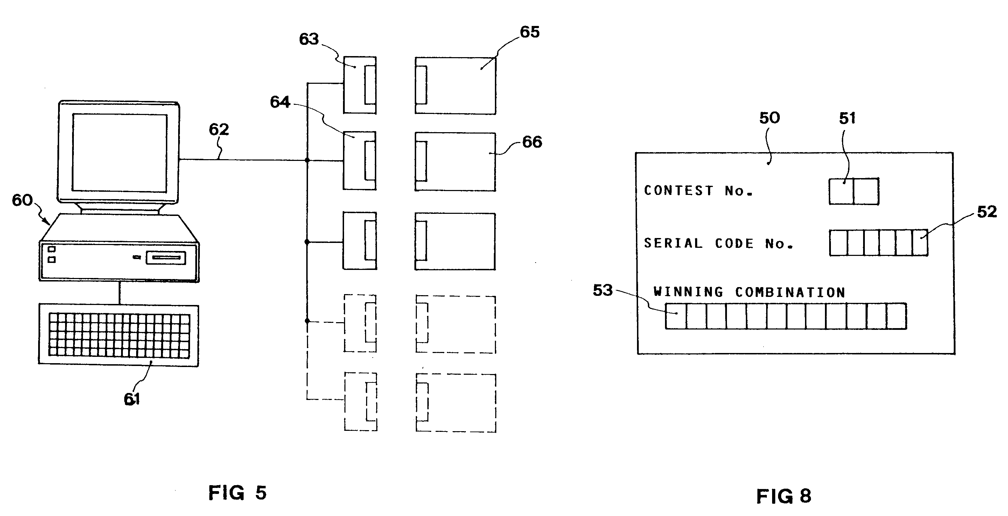

Returning now to figure 5, this shows the device for programming the user apparatus before these are put into circulation. The device of figure 5 comprises a computer such as a conventional Personal Computer, indicated as a whole in 60, said computer having an operator keyboard 61, connected by a bus 62 to a number of devices 63, 64, .... designed for temporary electrical connection to the user apparatus indicated in 65, 66, ....

The apparatus for use by the "presenter" in the case of live television or radio operations or the equivalent, has the job of warning the "presenter" when it is <u>not</u> the time to put a question to the public, that is to say to the owners of user apparatus, and more specifically when the "presenter" is <u>not</u> to start his "clock" which indicates to the listeners or viewers the time within which to reply to a question. This time limit, which has in precedence been indicated as a "slot", must be entirely within the previously defined time window, so that it can be identified in an univocal manner.

Furthermore, in order to take into account any difference in timing in the various clocks in the user apparatus with respect to the clock in the presenter's apparatus, time safety margins must be taken into account, indicated with TGa, TGb in figures 3 and 4 in the initial and final seconds of each time window.

In definition:

$T$ = length of the time window (seconds)

$TG$ = length of the safety time (seconds), assuming that

$$TG = TGa = TGb$$

$t$ = present time, expressed in seconds within $T$

(that is to say, expressed in seconds from the start of the time window to the present time)

the slot time, $Ts$, must be chosen as

$$Ts \leqq (T - 2 . TG)$$

The clock in the conductor's apparatus <u>cannot</u> start if

$$t > TG$$

or

$$t > T - T_G - T_S.$$

It is clear that, for the sake of ease, both the length and the starting point of the time window $T$ will be chosen in such a way as to take advantage of the natural periodical subdivision of time into minutes, hours and days.

If, for example, the time window is of $T = 2$ minutes, 30 time windows will be identified within each hour:

Time window No. 0: minutes 1 and 2 (first 120 seconds of the hour)

[Complete date and hour] No. 1: minutes 3 and 4

..................................................

[Complete date and hour] No. 29: minutes 59 and 60.

In this way, t can easily be obtained from the current time t on the internal clock in the conductor's apparatus:

$$t = .t._{120sec} [0......119]$$

For example, for a $T = 2$ minutes, a time of

6

```
t = 23    /  12  / 1991 - 12 : 32 : 14
    day   month  year   h    m    s
```

corresponds to the time window
No. 23 / 12 / 1991 / 12:16
(17th time window within the hour) while t = 14.
If t = 23/12/1991 - 12:33:14
then the time window would still be
No. 23/12/1991 - 12:16
while t = 74.

These calculations are also used in the user apparatus to calculate N time windows as a function of the time t marked by its own internal clock.

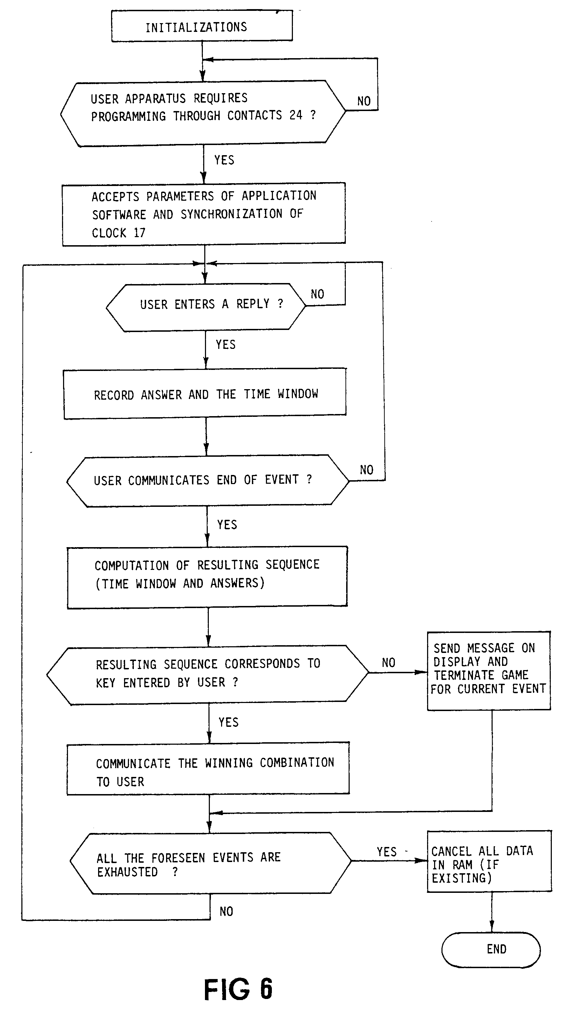

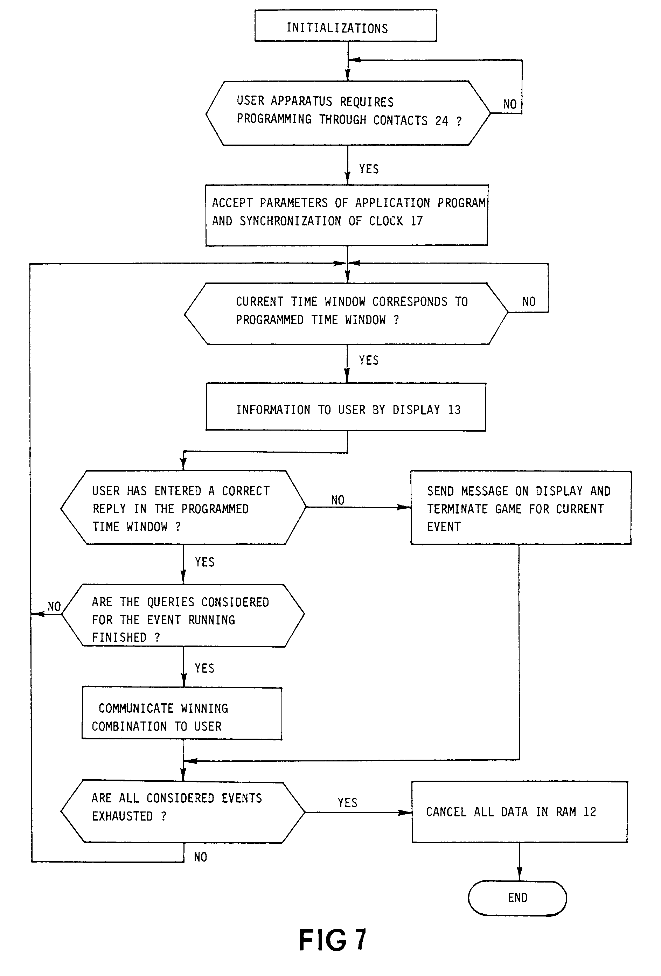

As indicated above, figures 6 and 7 show the flow charts of the program means resident in a generic user apparatus, in the case of "a posteriori" correlation and of advance correlation, respectively. The contents of the single blocks in the flow charts in figures 6 and 7 has already been illustrated hereinabove, and it is therefore considered unnecessary to give a detailed description thereof.

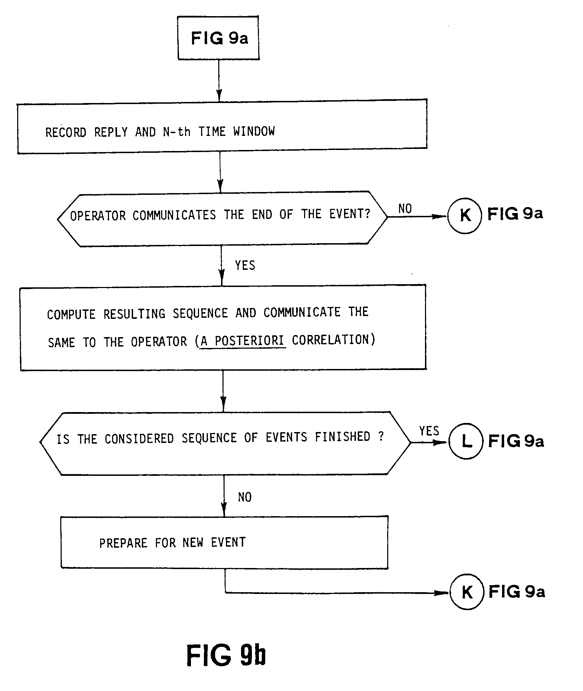

Figures 9a and 9b, which are to be taken as a whole, show the flow chart for the program means resident in the apparatus for use by the organizer and presenter of the events indicated with reference to figure 3, for interaction with the user apparatus in the case of "a posteriori" correlation. The apparatus for use by the game presenter can be a conventional Personal Computer programmed according to the criteria indicated in figures 9a and 9b. The Personal Computer is not illustrated specifically, as it can be any one of the numerous models commercially available, and consequently description thereof would be superfluous.

In case of operations using advance correlation, the apparatus for use by the presenter does not have to perform the relatively complex operations illustrated in figures 9a and 9b. In actual fact, the apparatus for use by the presenter may simply be a "clock" timing his work, bearing in mind the precaution that said clock must be isochronous with that of the user apparatus programmed to carry out advance correlation operations.

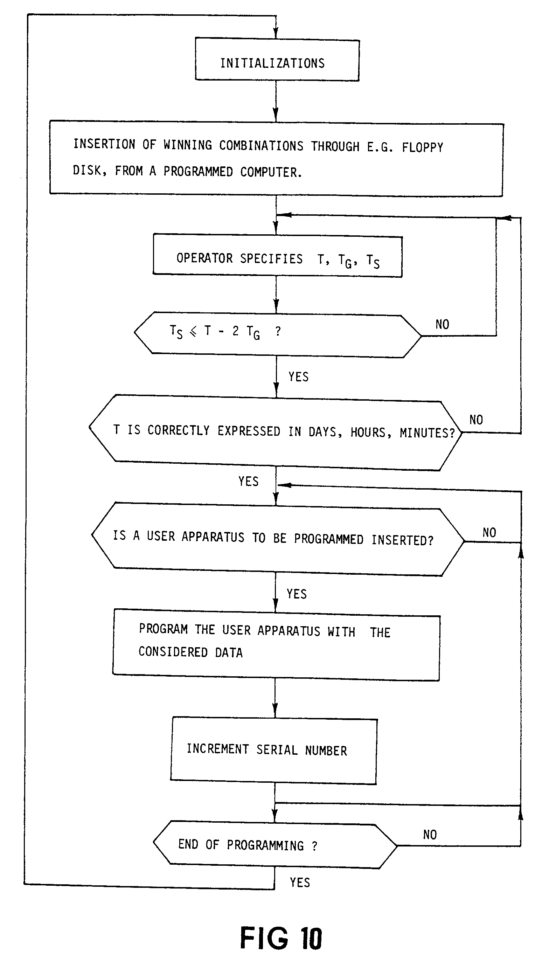

Finally, figure 10 illustrates the flow chart for program means resident in the programming apparatus according to figure 5.

In the flow chart illustrated in figure 10, in the block marked 100, in the case of user apparatus working in the a posteriori correlation mode, the following will be inserted:
a) Serial number
b) Absolute Time for synchronization (for the user apparatus' internal clock)
c) Algorithm for calculation of the Result sequence (for comparison with the KEY)
d) A certain number of (winning) Combinations, typically one for each programmed Event
e) Messages for questions, etc....

In the case of user apparatus working in the advance correlation mode, the following will be inserted in block 100:
a) Serial number
b) Absolute Time for synchronization (for the user apparatus' internal clock)
c) Time windows within which the user is to insert the replies
d) Correct Replies
e) A certain number of (winning) Combinations, typically one for each programmed Event
f) Messages for questions, etc....

For the completeness of the present description, the devices 63, 64, could be similar to peripheral interface devices for computerized credit cards ("smart cards") or the like. These are well known to the state of the art, and an expert in the field would be able to design the hardware required.

With reference to what has been stated above regarding the user apparatus, in a preferred embodiment of the invention these can be of a "disposable" type. In this case, advantageously, the user apparatus could be constructed in such a way that, once the object for which they were distributed to the public has been completed, they can be used as an ordinary pocket calculator, of a conventional type.

The present invention has been described with reference to its presently preferred embodiments, given as a non-limiting example, it being understood that alterations and variations can be introduced thereto in practice without departing from the scope of protection of the present invention.

**Claims**

1.  An apparatus for time-based games and/or semi-interactive activities, characterized in that it comprises:
    - multiple user apparatuses provided with display means, microprocessor means, keyboard means, and an absolute clock;
    - management apparatus for use by a company controlling and conducting semi-interactive activities with the owners of said user apparatuses;
    - a first information communication channel connected to said absolute clock, said channel being unidirectional from company to user;
    - a second information communication channel differing from said first channel in that it is from user to company, for transfer of information correlated to the time supplied by said clock, and of information received from said user and associated to further information supplied by the user to said user apparatus.

2.  An apparatus according to claim 1, characterized in that said first channel is made up of a direct communication from the user apparatus to the user himself.

3.  An apparatus according to claim 1, characterized in that said first channel is a mass media means.

4.  An apparatus according to claim 1, characterized in that said first channel is a television or radio transmission.

5.  An apparatus according to claim 1, characterized in that said first channel is formed by indicator boards associated with large-scale spectator events.

6.  An apparatus according to one or more of the preceding claims, characterized in that said second channel is a postal communication means.

7.  An apparatus according to one or more of the preceding claims, characterized in that said second channel is a telephone communication means.

8.  An apparatus according to one or more of the preceding claims, characterized in that said user and organizer apparatus comprise program means to generate time windows within which to perform an operation connected to an event and to the time supplied by said absolute clock.

9.  An apparatus according to claim 6, characterized in that said user apparatus comprise microprocessor means associated to a screen, a control keyboard, and an absolute clock; said computer being provided with program means according to the flow chart illustrated in the enclosed figures 5 or 6.

10. An apparatus according to one or more of the preceding claims, characterized in that said organizer/presenter apparatus comprises a computer operating using program means according to the flow chart illustrated in figures 9a and 9b taken as a whole.

11. An apparatus according to one or more of the preceding claims, characterized in that said user apparatus can only be programmed once by means of a programming apparatus and one or more peripherals which are connected temporally to said user apparatus by means of electric contacts; said programming apparatus comprising a computer provided with program means according to the flow chart illustrated in figure 10.

12. An apparatus according to one or more of the preceding claims, characterized in that said user apparatus can only be activated after or simultaneously with the programming operation.

13. An apparatus according to one or more of the preceding claims and substantially as illustrated and described with reference to the enclosed figures.

**FIG 1**

**FIG 2**

FIG 3

**FIG 4**

FIG 5

FIG 8

CONTEST No.

SERIAL CODE No.

WINNING COMBINATION

INITIALIZATIONS

USER APPARATUS REQUIRES PROGRAMMING THROUGH CONTACTS 24 ?　　NO

YES

ACCEPTS PARAMETERS OF APPLICATION SOFTWARE AND SYNCHRONIZATION OF CLOCK 17

USER ENTERS A REPLY ?　　NO

YES

RECORD ANSWER AND THE TIME WINDOW

USER COMMUNICATES END OF EVENT ?　　NO

YES

COMPUTATION OF RESULTING SEQUENCE (TIME WINDOW AND ANSWERS)

RESULTING SEQUENCE CORRESPONDS TO KEY ENTERED BY USER ?　　NO　　SEND MESSAGE ON DISPLAY AND TERMINATE GAME FOR CURRENT EVENT

YES

COMMUNICATE THE WINNING COMBINATION TO USER

ALL THE FORESEEN EVENTS ARE EXHAUSTED ?　　YES　　CANCEL ALL DATA IN RAM (IF EXISTING)

NO

END

# FIG 6

INITIALIZATIONS

USER APPARATUS REQUIRES
PROGRAMMING THROUGH CONTACTS 24 ? — NO

YES

ACCEPT PARAMETERS OF APPLICATION PROGRAM
AND SYNCHRONIZATION OF CLOCK 17

CURRENT TIME WINDOW CORRESPONDS TO
PROGRAMMED TIME WINDOW ? — NO

YES

INFORMATION TO USER BY DISPLAY 13

USER HAS ENTERED A CORRECT
REPLY IN THE PROGRAMMED
TIME WINDOW ? — NO → SEND MESSAGE ON DISPLAY AND
TERMINATE GAME FOR CURRENT
EVENT

YES

NO — ARE THE QUERIES CONSIDERED
FOR THE EVENT RUNNING
FINISHED ?

YES

COMMUNICATE WINNING
COMBINATION TO USER

ARE ALL CONSIDERED EVENTS
EXHAUSTED ? — YES → CANCEL ALL DATA IN RAM 12

NO

END

# FIG 7

14

FIG 9a

FIG 9a

RECORD REPLY AND N-th TIME WINDOW

OPERATOR COMMUNICATES THE END OF THE EVENT? ——NO——→ (K) FIG 9a

↓ YES

COMPUTE RESULTING SEQUENCE AND COMMUNICATE THE SAME TO THE OPERATOR (A POSTERIORI CORRELATION)

IS THE CONSIDERED SEQUENCE OF EVENTS FINISHED ? ——YES——→ (L) FIG 9a

↓ NO

PREPARE FOR NEW EVENT

————→ (K) FIG 9a

# FIG 9b

INITIALIZATIONS

INSERTION OF WINNING COMBINATIONS THROUGH E.G. FLOPPY DISK, FROM A PROGRAMMED COMPUTER.

OPERATOR SPECIFIES  T, $T_G$, $T_S$

$T_S \leqslant T - 2 T_G$  ?  NO

YES

T IS CORRECTLY EXPRESSED IN DAYS, HOURS, MINUTES?  NO

YES

IS A USER APPARATUS TO BE PROGRAMMED INSERTED?  NO

YES

PROGRAM THE USER APPARATUS WITH  THE CONSIDERED DATA

INCREMENT SERIAL NUMBER

END OF PROGRAMMING ?  NO

YES

# FIG 10

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-90 04439 (RIGHT HEMISPHERE PTY LIMITED, AU) 3 May 1990 <br> * page 4, line 13 - line 30 * <br> * page 4, line 36 - page 5, line 38 * <br> * page 7, line 4 - line 21 * <br> * page 8, line 2 - line 13 * <br> * page 8, line 35 - page 9, line 2 * <br> * page 13, line 7 - line 38 * <br> * page 14, line 31 - line 35 * <br> * page 17, line 11 - line 19 * <br> * page 18, line 14 - line 25 * <br> * page 19, line 3 - line 5 * <br> * page 23, line 11 - line 36 * <br> * page 24, line 3 - line 8 * <br> --- | 1-13 | G06F19/00 |
| X | EP-A-0 474 923 (SIGMA-DELTA N.V. , BE) 18 March 1992 <br> * column 1, line 30 - line 54 * <br> * column 2, line 8 - line 16 * <br> * column 2, line 40 - line 52 * <br> * column 3, line 8 - line 30 * <br> * column 3, line 35 - line 47 * <br> --- | 1-7,9-13 | |
| X | FR-A-2 626 731 (INFORMATIQUE ET REALITE, FR) 4 August 1989 <br> * page 3, line 5 - line 30 * <br> * page 5, line 20 - line 25 * <br> * page 6, line 18 - page 8, line 10 * <br> * page 8, line 25 - line 35 * <br> --- <br> -/-- | 1-7,9-13 | **TECHNICAL FIELDS SEARCHED** (Int.Cl.6) <br> <br> G06F <br> H04H <br> G09B <br> A63F |

The present search report has been drawn up for all claims

| Place of search | Date of completion of the search | Examiner |
|---|---|---|
| THE HAGUE | 21 April 1994 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 338 936 (TELECASH, FR) 25 October 1989<br>* column 1, line 25 - line 55 *<br>* column 2, line 45 - line 51 *<br>* column 3, line 14 - line 55 *<br>* column 6, line 29 - line 40 *<br>* column 7, line 44 - line 52 *<br>* column 12, line 20 - line 38 *<br>* column 12, line 55 - column 13, line 20 *<br>* column 13, line 35 - column 14, line 13 *<br>--- | 1-13 | |
| A | EP-A-0 479 691 (INFO TELECOM, FR) 8 April 1992<br>* page 3, line 5 - line 24 *<br>* page 4, line 5 - line 15 *<br>* page 5, line 6 - line 15 *<br>* page 5, line 54 - page 6, line 57 *<br>----- | 1-13 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 21 April 1994 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)